# EUROPÄISCHE PATENTSCHRIFT

(11) **EP 0 593 413 B1**
(45) Veröffentlichungstag und Bekanntmachung des Hinweises auf die Patenterteilung: **10.04.1996**
(21) Anmeldenummer: 93890200.4
(22) Anmeldetag: 12.10.1993
(51) Int. Cl.: G01J 5/08, F02B 77/08, G01M 15/00, G01J 5/00

(54) **Optoelektronische Messeinrichtung**
Optoelectronic measuring arrangement
Arrangement de mesure optoélectronique

(30) Priorität: 16.10.1992 AT 2047/92
(43) Veröffentlichungstag der Anmeldung: 20.04.1994
(73) Patentinhaber: AVL Gesellschaft für Verbrennungskraftmaschinen und Messtechnik mbH.Prof.Dr.Dr.h.c. Hans List, A-8020 Graz (AT)
(72) Erfinder: Plimon, Anton, Dipl.-Ing., A-8010 Graz (AT); Philipp, Harald Arnulf, Dr. Dipl.-Ing., A-8071 Wegersfeld (AT); Winklhofer, Ernst, Dr. Dipl.-Ing., A-8565 St. Johann ob Hohenburg 1 (AT)
(74) Vertreter: Krause, Walter, Dr. Dipl.-Ing.

(56) Entgegenhaltungen:
- EP-A- 0 325 917
- DE-A- 3 001 711
- US-A- 4 856 341
- US-A- 5 086 220

## Beschreibung

Die Erfindung betrifft eine Optoelektronische Meßeinrichtung zur Erfassung von Verbrennungsvorgängen im Brennraum einer in Betrieb befindlichen Brennkraftmaschine, mit dem Brennraum zugeordneten optischen Sensoren, welche mit einer Auswerteeinheit in Verbindung stehen, wobei die optischen Sensoren in einem den Brennraum begrenzenden Dichtelement liegen, welches in einer den Brennraum durchsetzenden Schnittebene angeordnet ist.

Für die Motorenentwicklung ist die Kenntnis über den zeitlichen und örtlichen Ablauf von Verbrennungsvorgängen von großer Bedeutung. Die bisher zur Diagnose eingesetzten Methoden lassen sich im wesentlichen in Flammenfotographie (mit Hochgeschwindigkeitsfilmen) und Lichtleitermeßtechnik an ausgewählten Stellen des Motors einteilen.

Um Flammenfotographie an Motoren einzusetzen, sind entweder relativ große Fenster oder entsprechende Öffnungen zur Einbringung eines Endoskops notwendig. Der Einbau hinreichend großflächiger Fenster ist jedoch praktisch nur an Forschungsmotoren möglich, welche dann nur in einem sehr eingeschränkten Drehzahl- und Lastbereich betrieben werden können. Weiters wird durch den Einbau von Fenstern das Wärmeleitverhalten von Brennräumen punktuell entscheidend verändert, was die Sinnhaftigkeit solcher Experimente, beispielsweise im Zusammenhang mit Klopfvorgängen, in Frage stellt.

Das größte Problem der Flammenfotographie liegt jedoch darin, mit der nötigen Empfindlichkeit genügend kurz belichtete Aufnahmen in großer Zahl aufzuzeichnen. Bei hoher Bildfrequenz hat man dabei immer mit Intensitätsproblemen zu kämpfen.

Im Zusammenhang mit der Lichtleitermeßtechnik ist es beispielsweise aus der EP-A 0 325 917 bekannt geworden, in die Kolbenmulde des Kolbens einer Brennkraftmaschine optische Sensoren einzubauen, deren Meßsignal über Lichtleiter und eine Koppelstelle aus dem beweglichen Kolben an den stationären Teil der Verbrennungskraftmaschine weitergegeben wird. Um eine hinreichend aussagekräftige Beobachtung des Verbrennungsvorganges zu ermöglichen, sind eine Vielzahl von Sonden, im dargestellten Beispiel insgesamt 25, über die Kolbenmulde verteilt. Ein derartiges System ist sehr aufwendig und kostspielig und praktisch nur in speziellen Versuchsmotoren anzuwenden.

Aus der DE-A 30 01 711 ist eine Sensoranordnung zur Erfassung der beim Klopfen einer Brennkraftmaschine auftretenden Schwingungen bekannt, bei der wenigstens ein optischer Aufnehmer im Brennraum verwendet wird, vorzugsweise ein Glasstab oder ein Lichtleitkabel aus Glasfasern. Die optischen Aufnehmer werden dabei entweder in die Zündkerze integriert, an eine Vorkammer angeschlossen oder in die Zylinderkopfdichtung eingesetzt.

Weiters ist aus der US-A 4 856 341 im Zusammenhang mit einer Materialprüfvorrichtung bekannt geworden, die Dichte sowie die Änderungen der Dichte einer mechanisch deformierten Probe mit einem Röntgenstrahl-CT-Scanner zu erfassen.

Aufgabe der Erfindung ist es, ausgehend von bekannten optoelektrischen Meßeinrichtungen, ein verbessertes Meßsystem vorzuschlagen, dessen Anwendung ohne grobe Eingriffe in den Motor bzw. in die Brennraumgeometrie auch in Serienmotoren durchgeführt werden kann.

Diese Aufgabe wird erfindungsgemäß dadurch gelöst, daß bei einer Optoelektronischen Meßeinrichtung der eingangs genannten Art die Sensoren zur Erzeugung eines zweidimensionalen Bildes der Verbrennungsvorgänge derart ausgerichtet sind, daß die Akzeptanzwinkelbereiche der einzelnen Sensoren den in der Schnittebene liegenden Bereich des Brennraumes möglichst gleichmäßig erfassen, wobei die Auswerteeinheit eine Recheneinheit aufweist, welche aus den Signalen der einzelnen Sensoren Helligkeitswerte für definierte Flächenbereiche der Schnittebene errechnet und diese in ein zweidimensionales Bild umsetzt.

Durch die Anordnung der optischen Sensoren im Dichtelement der Brennkraftmaschine entfallen Modifikationen am Motor, sodaß der Betriebsbereich des Motors (Drehzahl und Last) nicht eingeschränkt wird. Weiters sind keinerlei Bohrungen oder Öffnungen im Kolben oder im Zylinderkopf nötig. Die Signale der einzelnen Sensoren können mit an sich bekannt Algorithmen für die Emissionstomographie in zweidimensionale Bilder umgesetzt werden, wobei die Auflösung der Bilder im wesentlichen nur durch die Anzahl der verwendeten Sensoren beschränkt ist. Die erfindungsgemäße Meßeinrichtung ermöglicht genügend lange, zeitlich und örtlich auflösende Untersuchungen von Verbrennungsvorgängen, wobei auf der Elektronikseite Standardkomponenten zum Einsatz kommen können.

In einer Weiterbildung der Erfindung ist vorgesehen, daß die einzelnen Sensoren zu Baugruppen zusammengefaßt sind, wobei jede Baugruppe eine flache, im Dichtelement integrierte Halterung mit mehreren Sensoren aufweist und die Akzeptanzwinkelbereiche A der Sensoren einer Baugruppe den Brennraum fächerförmig erfassen. Die einzelnen Baugruppen sind erfindungsgemäß derart im Dichtelement angeordnet, daß Öffnungen im Dichtelement für z.B. Öl- und Wasserdurchlässe etc. freibleiben. Die erfindungsgemäße Meßeinrichtung ist dadurch leicht auf die örtlichen Verhältnisse am zu untersuchenden Motor anzupassen.

Bei der erindungsgemäßen Meßeinrichtung kann jeder Sensor aus einer in der Halterung fixierten Kugellinse bestehen, welche in optischem Kontakt mit einem in der Halterung geführten Lichtleiter steht, wobei über den Abstand zwischen Lichtleiter und Kugellinse die Größe des Akzeptanzwinkels des Sensors einstellbar ist.

Zum Schutz der Lichtleiter können diese erfindungsgemäß aus in Metallröhrchen geführten Glasfasern bestehen.

Eine besonders vorteilhafte Ausgestaltung der Erfindung sieht vor, daß die Kugellinsen in Bohrungen angeordnet sind, deren Achsen normal auf die Achsen der Bohrungen für die Lichtleiter stehen, daß die Kugellinsen durch beidseitig anliegende elastische Scheibchen, vorzugsweise aus Teflon, vor Druckkräften geschützt sind, sowie daß an der Halterung beidseitig dünne Metallfolien befestigt, vorzugsweise angeklebt sind.

Die Erfindung wird im folgenden anhand von Zeichnungen näher erläutert. Es zeigen:
- Fig. 1: schematisch ein Ausführungsbeispiel einer erfindungsgemäßen Meßeinrichtung zur Erfassung von Verbrennungsvorgängen im Brennraum einer Brennkraftmaschine sowie die
- Fig. 2 und 3: Details aus Fig. 1.

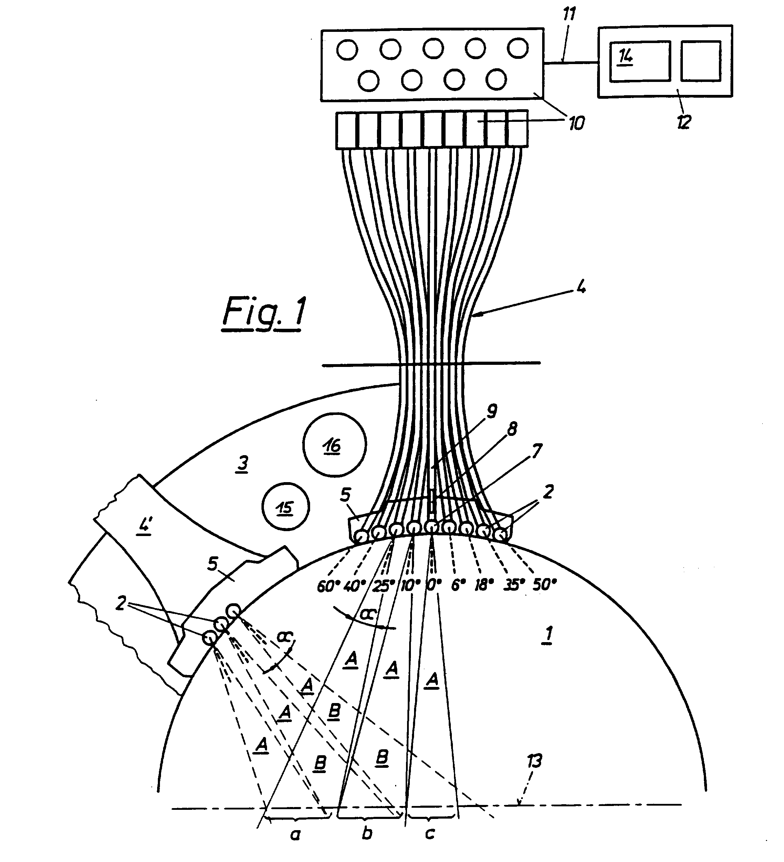

Das in Fig. 1 dargestellte Ausführungsbeispiel einer erfindungsgemäßen optoelektronische Meßeinrichtung zur Erfassung von Verbrennungsvorgängen im Brennraum 1 einer nicht weiter dargestellten Brennkraftmaschine weist eine Vielzahl von optischen Sensoren 2 auf, welche in einem Dichtelement 3, beispielsweise einer Zylinderkopfdichtung, integriert sind.

Die einzelnen Sensoren können beispielsweise zu Baugruppen 4, 4',... zusammengefaßt sein, wobei jede Baugruppe 4, 4', ... eine im Dichtelement 3 integrierte Halterung 5 mit mehreren Sensoren 2 umfaßt. Die einzelnen Sensoren 2 nehmen das aus dem Brennraum 1 kommende Licht durch eine Apertur 6 und eine dahinterliegende Kugellinse 7 auf. Die Kugellinse, beispielsweise aus Quarz oder Saphir, steht in optischem Kontakt mit einem Lichtleiter 8, beispielsweise mit einer in einem Metallröhrchen 9 angeordneten Glasfaser. Die Größe der Apertur, die Abbildungseigenschaften der Kugellinse 7, der Faserdurchmesser und der Abstand zwischen Glasfaser und Kugellinse definieren einen Raum- oder Akzeptanzwinkel α von ca. 5°, aus welchem Licht in den Lichtleiter eingekoppelt werden kann. Mit Glasfasern, welche durch die Metallröhrchen 9 geschützt sind, wird das Licht über Verbindungsstecker 10 und einem weiteren Lichtleiter 11, einer in einer Auswerteeinheit 12 angeordneten Detektor-Verstärker-Einheit zugeführt und in ein elektrisches Signal umgewandelt.

Die Sensoren 2 einer Baugruppe 4 können auf benachbarte Bereiche a, b, c, ... einer in der Schnittebene des Dichtelementes 3 liegenden, gedachten Linie 13 ausgerichtet sein. Dadurch kann die Ausbreitung bzw. Inhomogenitäten in der Ausbreitung der Flammenfront in speziellen, durch die Anordnung der Baugruppe 4 auswählbaren Richtungen bestimmt werden.

Die Anwendung der Meßeinrichtung besteht darin, die Sensoren 2 in einer zur tomographischen Auswertung der Signale geeigneten Form im Dichtelement 3 anzuordnen. Dabei werden Anordnungen ausgewählt, bei welchen die Akzeptanzwinkelbereiche A der einzelnen Sensoren 2 den durch die Dichtebene definierten Bereich des Brennraumes 1 möglichst gleichmäßig erfassen. Die Akzeptanzwinkelbereiche A schneiden sich in Flächenbereichen B, wobei hier zur besseren Übersicht nur zwei von vielen Baugruppen 4, 4' dargestellt wurden. Die Signale der einzelnen Sensoren werden durch ein Vielkanalerfassungssystem mit genügender Geschwindigkeit in digitaler Form aufgezeichnet. Die so erhaltenen Daten können dann durch an sich bekannte Tomographiealgorithmen in einer Rechnereinheit 14 der Auswerteeinheit 12 verarbeitet werden, und so die Lichtemission in der Schnittebene der Zylinderkopfdichtung rekonstruiert werden. Zur genügenden örtlichen Erfassung der Verbrennungsvorgänge werden typischerweise ungefähr hundert Sensoren verwendet. Beispielsweise können jeweils neun Sensoren in elf Baugruppen angeordnet sein.

Diese Baugruppen werden den örtlichen Verhältnissen am zu untersuchenden Motor angepaßt. So können z.B. die einzelnen Baugruppen 4, 4',... unter Freilassung von Öffnungen 15, 16 im Dichtelement 3, beispielsweise für Öl- oder Wasserdurchlässe bzw. für Befestigungsschrauben, angeordnet sein.

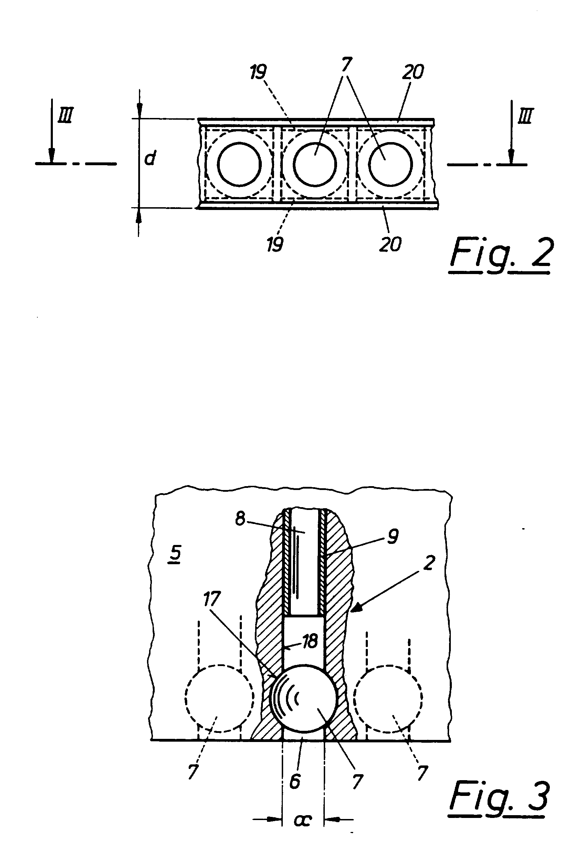

Die Fig. 2 und 3 zeigen die Ausbildung der Sensoren 2 im Detail. Fig. 2 stellt eine Frontansicht und Fig. 3 einen Schnitt entlang der Linie III-III in Fig. 2 dar.

Zum Schutz vor den Vorspannkräften im Dichtelement weist die Kugellinse 7 in ihrer Bohrung 17, welche normal auf die Bohrung 18 für den Lichtleiter 8 steht, beidseitig ein elastisches Scheibchen 19, beispielsweise aus Teflon, auf. Die Scheibchen 19 werden durch beidseitig auf die Halterung 5 aufgeklebte Metallfolien 20 geschützt und gehalten. Die Gesamtdicke d kann an die jeweilige Dicke der Zylinderkopfdichtung angepaßt werden und beträgt ca. 2 mm.

## Patentansprüche

1. Optoelektronische Meßeinrichtung zur Erfassung von Verbrennungsvorgängen im Brennraum einer in Betrieb befindlichen Brennkraftmaschine, mit dem Brennraum zugeordneten optischen Sensoren (2), welche mit einer Auswerteeinheit (12) in Verbindung stehen, wobei die optischen Sensoren in einem den Brennraum begrenzenden Dichtelement liegen, welches in einer den Brennraum durchsetzenden Schnittebene angeordnet ist **dadurch gekennzeichnet,** daß die Sensoren (2) zur Erzeugung eines zweidimensionalen Bildes der Verbrennungsvorgänge derart ausgerichtet sind, daß die Akzeptanzwinkelbereiche (A) der einzelnen Sensoren (2) den in der Schnittebene liegenden Bereich des Brennraumes (1) möglichst gleichmäßig erfassen, wobei die Auswerteeinheit (12) eine Recheneinheit (14) aufweist, welche aus den Signalen der einzelnen Sensoren (2) Helligkeitswerte für definierte Flächenbereiche (B) der Schnittebene errechnet und diese in ein zweidimensionales Bild umsetzt.

2. Meßeinrichtung nach Anspruch 1, **dadurch gekennzeichnet,** daß die einzelnen Sensoren (2) zu Baugruppen (4, 4',...) zusammengefaßt sind, wobei jede Baugruppe (4, 4'...) eine flache, im Dichtelement (3) integrierte Halterung (5) mit mehreren Sensoren (2) aufweist und die Akzeptanzwinkelbereiche A der Sensoren einer Baugruppe (4, 4'...) den Brennraum (1) fächerförmig erfassen.

3. Meßeinrichtung nach Anspruch 2, **dadurch gekennzeichnet,** daß jeder Sensor (2) aus einer in der Halterung (5) fixierten Kugellinse (7) besteht, welche in optischem Kontakt mit einem in der Halterung (5) geführten Lichtleiter (8) steht, wobei über den Abstand zwischen Lichtleiter (8) und Kugellinse (7) die Größe des Akzeptanzwinkels α des Sensors einstellbar ist.

4. Meßeinrichtung nach Anspruch 3, **dadurch gekennzeichnet,** daß die Lichtleiter (8) aus in Metallröhrchen (9) geführten Glasfasern bestehen.

5. Meßeinrichtung nach Anspruch 3 oder 4, **dadurch gekennzeichnet,** daß die Kugellinsen (7) in Bohrungen (17) angeordnet sind, deren Achsen normal auf die Achsen der Bohrungen (18) für die Lichtleiter (8) stehen, daß die Kugellinsen (7) durch beidseitig anliegende elastische Scheibchen (19), vorzugsweise aus Teflon, vor Druckkräften geschützt sind, sowie daß an der Halterung (5) beidseitig dünne Metallfolien (20) befestigt, vorzugsweise angeklebt sind.

6. Meßeinrichtung nach einem der Ansprüche 2 bis 5, **dadurch gekennzeichnet,** daß die einzelnen Baugruppen (4, 4',...) derart im Dichtelement (3) angeordnet sind, daß Öffnungen (15, 16) im Dichtelement (3) für z.B. Öl- und Wasserdurchlässe etc. freibleiben.

7. Meßeinrichtung nach einem der Ansprüche 1 bis 6, **dadurch gekennzeichnet,** daß die optischen Sensoren (2) bzw. deren Halterungen (5) in der Zylinderkopfdichtung einer Brennkraftmaschine angeordnet sind.

## Claims

1. Optoelectronic measuring device for monitoring combustion processes in the combustion chamber of an internal combustion engine during operation, with optical sensors (2) covering the combustion chamber, which are connected to an evaluation unit (12), said optical sensors being placed in a sealing element bounding the combustion chamber, which element is positioned in a plane cutting the combustion chamber, **characterized in that** the sensors (2), in order to generate a two-dimensional image of the combustion processes, are directed such that the acceptance angle areas (A) of the individual sensors (2) cover the area of the combustion chamber (1) located in the cutting plane as uniformly as possible, the evaluation unit (12) being provided with a processor (14) calculating brightness values for defined areas (B) of the cutting plane from the signals of the individual sensors (2) and converting them into a two-dimensional image.

2. Measuring device as in claim 1, **characterized in that** the individual sensors (2) are combined into groups (4, 4', ...), each group (4, 4', ...) being provided with a flat mounting bracket (5) which is integrated in the sealing element (3) and holds several sensors (2), the acceptance angle areas A of the individual sensors of a group (4, 4', ...) ) covering the combustion chamber (1) like a fan.

3. Measuring device as in claim 2, **characterized in that** each sensor (2) is configured as a spherical lens (7) held in the mounting bracket (5), which lens (7) is in optical contact with a light guide (8) held by the mounting bracket (5), the magnitude of the acceptance angle α of the sensor being adjustable by selection of the distance between light guide (8) and spherical lens (7).

4. Measuring device as in claim 3, **characterized in that** the light guides (8) are glass fibers guided in metal tubes (9).

5. Measuring device as in claim 3 or 4, **characterized in that** the spherical lenses (7) are placed in bores (17) whose axes are normal to the axes of the bores (18) for the light guides (8), and that the spherical lenses (7) are protected against pressure forces by elastic washers (19), preferably of teflon, which are placed on both sides of the lenses (7), and, further, that thin metal foils (20) are attached to both sides of the mounting bracket (5), preferably with an adhesive.

6. Measuring device as in any of claims 2 to 5, **characterized in that** the individual groups (4, 4', ...) are positioned in the sealing element (3) so as to leave openings (15, 16) in the sealing element (3), for instance, for the passage of oil and water.

7. Measuring device as in any of claims 1 to 6, **characterized in that** the optical sensors (2), or rather, their mounting brackets (5) are located in the cylinder head gasket of an internal combustion engine.

## Revendications

1. Installation de mesure optoélectronique pour détecter les opérations de combustion dans la chambre de combustion d'un moteur à combustion interne en fonctionnement, comprenant des capteurs optiques (2) associés à la chambre de combustion, reliés à une unité d'exploitation (12), les capteurs optiques étant situés dans un élément d'étanchéité délimitant la chambre de combustion, dans un plan de coupe traversant la chambre de combustion, caractérisée en ce que les capteurs (2) sont alignés pour créer une image bi-dimensionnelle des opérations de combustion de façon que la plage angulaire d'acceptance (A) des différents capteurs (2) détecte aussi régulièrement que possible la zone de la chambre de combustion (1) située dans la plan de coupe tandis qu'une unité d'exploitation (12) comporte une unité de calcul (14) qui, partant des signaux des différents capteurs (2), calcule des valeurs de clarté pour les zones de surface (B) définies du plan de coupe et les convertit en une image bi-dimensionnelle.

2. Installation de mesure selon la revendication 1, caractérisée en ce que les différents capteurs (2) sont réunis en des groupes (4, 4'...), chaque groupe (4, 4'...) ayant un support (5), plat, intégré à l'élément d'étanchéité (3) et comportant plusieurs capteurs (2) et la plage d'angle d'acceptance (A) des capteurs d'un groupe (4, 4'...) détectant la chambre de combustion (1) suivant une forme d'éventail.

3. Installation de mesure selon la revendication 2, caractérisée en ce que chaque capteur (2) se compose d'une lentille sphérique (7) fixée dans un support (5) et qui est en contact optique avec un guide de lumière (8) passant dans le support (5), et la distance entre le guide de lumière (8) et la lentille sphérique (7) règle l'amplitude de l'angle d'acceptance α du capteur.

4. Installation de mesure selon la revendication 3, caractérisée en ce que les guides d'ondes (8) sont des fibres de verre passant dans des petits tubes métalliques (9).

5. Installation de mesure selon la revendication 3 ou 4, caractérisée en ce que les lentilles sphériques (7) sont logées dans des perçages (17) dont les axes sont perpendiculaires aux axes des perçages (18) des guides de lumière (8), les lentilles sphériques (7) étant protégées par des rondelles (19), élastiques, de préférence en Téflon, appliquées sur les deux faces, contre les efforts de pression, et en ce que sur le support (5), des deux côtés, est fixée une mince feuille métallique (20), de préférence par collage.

6. Installation de mesure selon l'une des revendications 2 à 5, caractérisée en ce que les différents groupes (4, 4',...) sont prévus dans l'élément d'étanchéité (3) pour que les ouvertures (15, 16) de l'élément d'étanchéité (3) restent dégagées pour des passages d'huile et d'eau, etc...

7. Installation de mesure selon l'une des revendications 1 à 6, caractérisée en ce que les capteurs optiques (2) ou leur support (5) sont prévus dans le joint de culasse d'un moteur à combustion interne.
